# EUROPEAN PATENT SPECIFICATION

(11) **EP 2 415 374 B1**
(45) Date of publication and mention of the grant of the patent: **16.04.2014**
(21) Application number: 10171789.0
(22) Date of filing: 03.08.2010
(51) Int. Cl.: A47J 31/04, A47J 31/06, A47J 31/18

(54) **Double container automated tea apparatus having a pump**
Automatische Teevorrichtung mit Doppelbehälter und einer Pumpe
Appareil automatique de thé à double conteneur disposant d'une pompe

(43) Date of publication of application: 08.02.2012
(73) Proprietor: Eksen Makine Sanayi ve Ticaret A.S., 41480 Kocaeli (TR)
(72) Inventor: Tahincioglu, Besim, 41480 Kocaeli (TR)
(74) Representative: Sevinç, Erkan

(56) References cited:
- WO-A1-2010/041003
- US-A1- 2004 149 138

## Description

### Technical Field of the Invention

The present invention pertains to a tea preparation machine and more specifically a double container automatic tea machine with a pump.

### Background of the Invention

Tea is traditionally consumed on a daily basis in large quantities in the country of the applicant. A good flavor tea is believed to be prepared by way of boiling water in a first container and steeping tea leaves in hot water in a second container.

A machine similar to the invention is described in WO 2010/041003.

A common problem of automated tea preparing machines is that they provide only a limited automation by which water is boiled in a first container and then kept warm therein as long as preferred to allow brewing of tea leaves in a second top container. Therefore, to complete brewing, the user himself must add water to the top container from the boiling receptacle; which means a step which is merely user dependant to the extent that in the absence of user intervention, the whole tea preparing process is aborted, is in question.

Nevertheless, it is observed that tea consumers are not reluctant to involve in the tea preparing process and yet prefer such "half-automated" tea preparing machines to conventional non-electrical tea preparing methods. A fully automated tea preparing apparatus having a reasonable price tag and which can transfer boiled water to the top container where dry tea leaves lie is yet believed to be a major step toward consumer satisfaction.

Another problem arising in association with the "good flavor" of the prepared tea is the temperature of the water in the boiling container which is transferred therefrom to the top container. It is believed that a "good flavor" is obtained only if dry tea leaves are exposed to hot water the temperature of which is within a predetermined range. Otherwise flavor of the leaves is not adequately extracted.

To ensure a "good flavor", the present invention proposes a safe temperature margin within the range allowing transfer of the boiled water at the required temperature. The preferred embodiment of the present invention provides a boiled water transfer means automatically activated upon reaching a certain temperature.

### Objects of the Invention

Primary object of the present invention is to provide an electrical tea machine which is fully automated to the extent that it can carry out both boiling and brewing operations without user intervention being necessitated.

Another object of the present invention is to provide a fully automated tea machine having a safe temperature margin which enables transfer of the boiled water at the required temperature.

### Summary of the Invention

The present invention is defined in claim 1 and proposes a domestic appliance and specifically a tea machine having a first container for boiling water and a second container containing plant leaves to be brewed. Said second container is conventionally placed on top of said first container.

The electrical household appliance of the invention comprises a first container for boiling water and a second container suitable for placing on top of said first container such that plant leaves are placed therein to be brewed in heated water. Said first container comprises a bidirectional valve selectively establishing fluid communication with said second container in response to presence of a pusher mechanism of said first container in engaging relationship with said bidirectional valve.

Said apparatus further comprises a pump effecting boiled water transfer through sad established fluid communication in between said first container and said second container upon heated water reaches a certain temperature in said boiling container.

### Brief Description of the Figures

Accompanying drawings are given solely for the purpose of exemplifying a fully automated tea machine whose advantages over prior art were outlined above and will be explained in detail hereinafter:
Fig. 1 demonstrates a lateral cross-sectional view of the tea apparatus according to the present invention.
Fig. 2 demonstrates a bottom cross-sectional view of the boiling container with electrical heater means according with to the present invention.
Fig. 3 demonstrates a lateral cross-sectional view of the pump in the boiling container with inlet and outlet conduits according to the present invention.

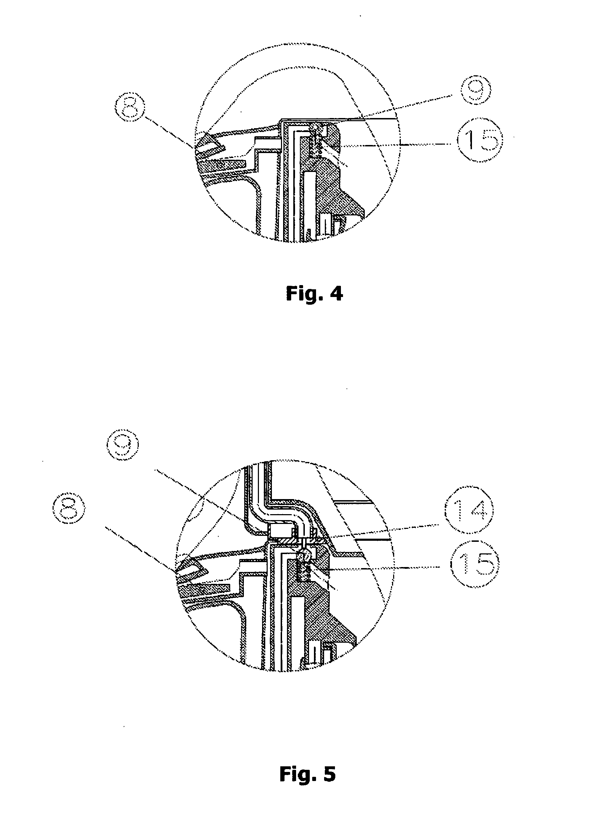

Fig. 4 demonstrates a lateral cross-sectional view of the bidirectional valve according to the present invention.
Fig. 5 demonstrates a lateral cross-sectional view of the bidirectional valve and the pusher mechanism engaged therewith according to the present invention.

### Detailed Description of the Invention

Referring now to the figures outlined above, the present invention proposes an electrical household appliance for preparing tea in a traditional manner, i.e. by way of using separate brewing and boiling receptacles (respectively 13 and 17). The appliance comprises a first container (17) for boiling water prior to brewing and a second container (13) in which tea leaves are placed and brewed in hot water accordingly.

Both receptacles (13, 17) are put one above another to allow thermal communication and heat energy radiated from a heat source in communication with said first container (17) also reach said second container (13). The base of said second container (13) therefore covers the open upper end of said first container (17) in a conventional manner.

The heating arrangement of the tea preparation apparatus comprises a first electrical heating means (3) having a greater resistance with respect to a second electrical heating means (4) with a lower active power dissipation.

As is generally practiced in the available art, effective power consumption by said heat source is lowered during brewing. Temperature in the lower container may be controlled by means of a plurality of control arrangements and sensors; that is while temperature in the lower container (17) may be kept in a near-boiling temperature, different control schemes to allow continuous or discontinuous powering of the heat source can be applied.

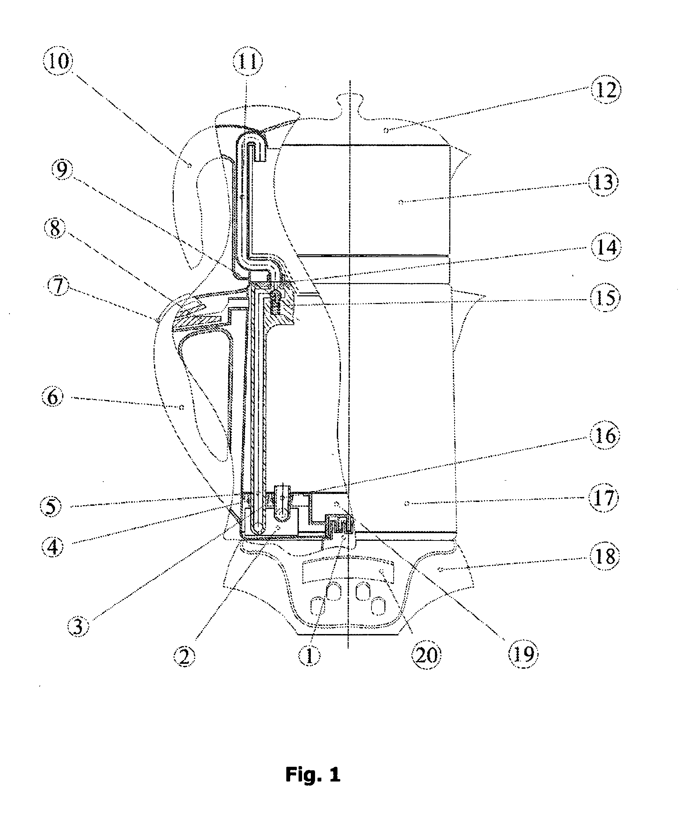

Referring to Fig. 1, the lower container (17) according to the present invention comprises a handle (6) joined to the lower container (17) body. The machine conventionally comprises a steam switch (8) and a steam switch button (7). The apparatus can typically be set to boiling mode by said steam switch button (7).

The upper container comprises a lid (12) and a handle (10) as seen in Fig. 1. The lower container (17) according to the present invention is connected to an electrical heater base (18), said base (18) conventionally comprising an electrical connector (1) associated with an electrical adaptor (19).

The tea preparing apparatus according to the invention comprises an electronic control unit (20) allowing a user start the apparatus automatically at a specified time or manually. Therefore, users are allowed to set a timer to initiate and undertake tea preparing at a desired time interval. The boiling container (17) should be filled with water prior to switching the apparatus on. Automatic transfer of boiled water will be initiated only if the fluid communication from the lower container (17) to the upper container (13) is established as explained below.

The upper container (13) according to the present invention comprises a pusher mechanism (14) having an axial rod slidably engaged within a spring housing in which a spring (15) biases a ball against said axial rod. Said spring loaded ball in said spring housing act as bidirectional valve (9) selectively establishing fluid communication with said upper container (13) or teapot (13).

When said upper container (13) is appropriately positioned on top of said lower container (17), a fluid communication is established between a boiler evacuation conduit (5) and an intake orifice equipped with said pusher mechanism (9) of a teapot (13) conduit (11). Said teapot (13) conduit (11) therefore provides that boiled water is poured out of its vent down, on top of tea leaves lying on the ground of the container (13). In the absence of the teapot (13) appropriately positioned with its pusher mechanism (14) having engaging relationship with said bidirectional valve (9), said bidirectional valve (9)'s ball joint is freely pushed up by said helical spring (15) such that boiled water pumped along said boiler evacuation conduit (5) is conveyed from said conduit's (5) upper end back to the lower container (17) passing through said spring (15).

The initiation of the pumping allowing transfer of boiled water to said teapot (13) as explained above is controlled as to the temperature of the water to be transferred as this is believed to be crucial in the flavor of the brewed tea.

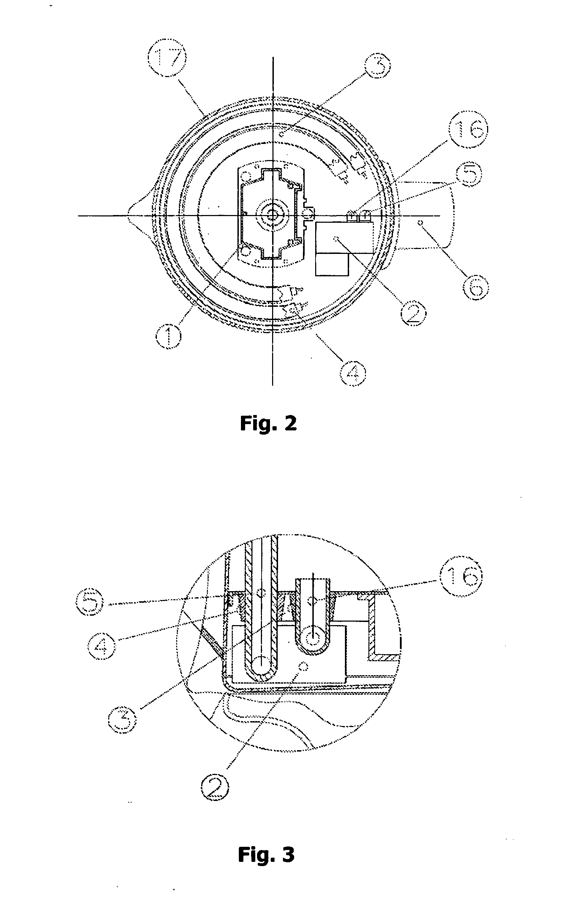

Fig. 2 demonstrate configuration of the greater wattage resistance (3) with respect to the lower wattage resistance (4) in which the greater wattage resistance (3) is encircled by the perimetrically extending lower wattage resistance (4).

When 98° C temperature is reached in the lower container (17), said steam switch (8) activates "keep warm" mode and power is only supplied to said lower wattage resistance (4) instead of both said greater wattage resistance (3) and said lower wattage resistance (4). Upon activation of "keep warm" mode, a pump (2) controlled by said control unit (20) starts transferring boiled water from said lower container (17) to said upper container (13). Said pump (2) communicates with said lower container (17) via an inlet conduit (16) and transfers boiled water to said upper container (13) via an evacuation conduit (5). It is noted that, for security reasons, said pump (2) does not transfer a water amount exceeding the capacity of the upper container (13). Therefore, said pump (2) is energized only for a certain period of time to transfer a certain amount of water.

In a nutshell, the present invention provides an electrical household appliance comprising a first container (17) for boiling water and a second container (13) in thermal communication with said first container (17) and in which plant leaves are placed in heated water for brewing. Said second container (13) is suitable for placing on top of said first container (17) such that the base of said second container (13) cover the upper open end of said first container (17). Said first container (17) comprises a bidirectional valve (9) selectively establishing fluid communication with said second container (13) in response to presence of a pusher mechanism (14) of said second container (13) in engaging relationship with said bidirectional valve (9).

## Claims

1. An electrical household appliance comprising a first container (17) for boiling water and a second container (13) in thermal communication with said first container (17) and in which plant leaves are placed in heated water for brewing, said second container (13) also being suitable for placing on top of said first container (17) such that the base of said second container (13) cover the upper open end of said first container (17) wherein said first container (17) comprises a bidirectional valve (9) selectively establishing fluid communication with said second container (13) in response to presence of said upper container (13) on top of said lower container (17) and a pump (2) transferring boiled water to said first container (13) through said established fluid communication.

2. An electrical household appliance as set forth in Claim 1 wherein said fluid communication with said second container (13) is established in response to presence of a pusher mechanism (14) of said second container (13) in engaging relationship with said bidirectional valve (9).

3. An electrical household appliance as set forth in Claim 2 wherein said pusher mechanism (14) has a rod slidably engaged within a spring housing of said bidirectional valve (9) in which a spring (15) biases a ball against said rod.

4. An electrical household appliance as set forth in Claim 1 or 3 wherein said bidirectional valve (9) conveys heated water back to said first container (17) in response to the absence of said pusher mechanism (14) of said second container (13)

5. An electrical household appliance as set forth in Claim 4 wherein said fluid communication is established between an evacuation conduit (5) of said first container (17) and a teapot conduit (11) of said second container (13).

6. An electrical household appliance as set forth in Claim 5 wherein said teapot conduit (11) comprises an upper vent out of which boiled water is poured down, on top of tea leaves lying on the ground of said second container (13).

7. An electrical household appliance as set forth in Claim 6 wherein said pump (2) communicates with said lower container (17) via an inlet conduit (16) and transfers boiled water to said upper container (13) via an evacuation conduit (5).

8. An electrical household appliance as set forth in Claim 7 wherein said evacuation conduit's (5) end leads to said bidirectional valve (9).

9. An electrical household appliance as set forth in Claim 8 wherein said evacuation conduit (5) and said inlet conduit (16) extend perpendicular with respect to the ground of said lower container (17).

10. An electrical household appliance as set forth in any of previous claims wherein said appliance comprises a first electrical heating means (3) having a greater resistance with respect to a second electrical heating means (4) with a lower resistance.

11. An electrical household appliance as set forth in Claim 10 wherein said greater wattage resistance (3) is encircled by the perimetrically extending lower wattage resistance (4).

12. An electrical household appliance as set forth in any of previous claims wherein said appliance comprises an electronic control unit (20) activating "keep warm" mode upon a steam switch (8) senses a certain temperature and powering said lower wattage resistance (4) instead of both said greater wattage resistance (3) and said lower wattage resistance (4).

13. An electrical household appliance as set forth in Claim 12 wherein said appliance comprises a timer in communication with said electronic control unit (20), allowing users set a specified time for initiation of tea preparation

## Patentansprüche

1. Elektrisches Haushaltsgerät mit einem ersten Behälter (17) zum Kochen von Wasser und einem zweiten Behälter (13), der mit dem ersten Behälter (17) thermisch verbunden ist und mit Pflanzenblättern zum Aufkochen in heißem Wasser befüllt wird, wobei der zweite Behälter (13) auch zum derartigen Aufsetzen auf den ersten Behälter (17) geeignet ist, dass dabei das Unterteil des zweiten Behälters (13) das obere offene Ende des ersten Behälters (17) abdeckt, bei dem der erste Behälter (17) ein bidirektionales Ventil (9) umfasst, welches als Reaktion auf das Vorhandensein des oberen Behälters (13) auf dem unteren Behälter (17) selektiv eine Flüssigkeitsverbindung zum zweiten Behälter (13) herstellt, und bei dem eine Pumpe (2) gekochtes Wasser über die hergestellte Flüssigkeitsverbindung an den ersten Behälter (13) leitet.

2. Elektrisches Haushaltsgerät nach Anspruch 1, bei dem die Flüssigkeitsverbindung zum zweiten Behälter (13) als Reaktion auf das Vorhandensein eines Schiebemechanismus (14) des zweiten Behälters (13) hergestellt wird, welcher sich mit dem bidirektionalen Ventil (9) in Eingriff befindet.

3. Elektrisches Haushaltsgerät nach Anspruch 2, bei dem der Schiebemechanismus (14) einen Stab aufweist, der im Inneren eines Federgehäuses des bidirektionalen Ventils (9) verschiebbar eingerastet ist, in welchem eine Feder (15) eine Kugel gegen diesen Stab ablenkt.

4. Elektrisches Haushaltsgerät nach Anspruch 1 oder 3, bei dem das bidirektionale Ventil (9) als Reaktion auf das Nichtvorhandensein des Schiebemechanismus (14) des zweiten Behälters (13) erhitztes Wasser an den ersten Behälter (17) zurückleitet.

5. Elektrisches Haushaltsgerät nach Anspruch 4, bei dem die Flüssigkeitsverbindung zwischen einer Entleerungsleitung (5) des ersten Behälters (17) und einer Teekannenleitung (11) des zweiten Behälters (13) hergestellt wird.

6. Elektrisches Haushaltsgerät nach Anspruch 5, bei dem die Teekannenleitung (11) eine obere Öffnung umfasst, aus der gekochtes Wasser auf Teeblätter am Boden des zweiten Behälters (13) gegossen wird.

7. Elektrisches Haushaltsgerät nach Anspruch 6, bei dem die Pumpe (2) über eine Einlassleitung (16) mit dem unteren Behälter (17) in Verbindung steht und gekochtes Wasser über eine Entleerungsleitung (5) an den oberen Behälter (13) leitet.

8. Elektrisches Haushaltsgerät nach Anspruch 7, bei dem das Ende der Entleerungsleitung (5) zum bidirektionalen Ventil (9) verläuft.

9. Elektrisches Haushaltsgerät nach Anspruch 8, bei dem die Entleerungsleitung (5) und die Einlassleitung (16) senkrecht zum Boden des unteren Behälters (17) verlaufen.

10. Elektrisches Haushaltsgerät nach einem der voranstehenden Ansprüche, bei dem das Gerät eine erste elektrische Heizvorrichtung (3) umfasst, die auf eine zweite elektrische Heizvorrichtung (4) mit niedrigerem Widerstand bezogen einen höheren Widerstand aufweist.

11. Elektrisches Haushaltsgerät nach Anspruch 10, bei dem der höhere Widerstand (3) von dem rundum verlaufenden niedrigeren Widerstand (4) umgeben ist.

12. Elektrisches Haushaltsgerät nach einem der voranstehenden Ansprüche, bei dem das Gerät eine elektronische Steuereinheit (20) umfasst, die einen "Warmhalte"-Modus aktiviert, wenn ein Dampfschalter (8) eine bestimmte Temperatur erfasst, und dann anstelle sowohl des höheren Widerstands (3) als auch des niedrigeren Widerstands (4) lediglich den niedrigeren Widerstand (4) ansteuert.

13. Elektrisches Haushaltsgerät nach Anspruch 12, bei dem das Gerät einen Zeitschalter umfasst, der mit der elektronischen Steuereinheit (20) in Verbindung steht und dem Benutzer die Eingabe einer bestimmten Zeit für den Beginn der Teezubereitung ermöglicht.

## Revendications

1. Appareil électroménager comprenant un premier contenant (17) pour faire bouillir de l'eau et un deuxième contenant (13) en communication thermique avec ledit premier contenant (17) et dans lequel des feuilles de plante sont placées dans une eau chauffée pour infusion, ledit deuxième contenant (13) étant également approprié pour être placé au-dessus dudit premier contenant (17) de sorte que la base dudit deuxième contenant (13) recouvre l'extrémité ouverte supérieure dudit premier contenant (17), dans lequel ledit premier contenant (17) comprend une soupape bidirectionnelle (9) établissant de manière sélective une communication fluidique avec ledit deuxième contenant (13) en réponse à la présence dudit contenant supérieur (13) au-dessus dudit contenant inférieur (17) et une pompe (2) transférant l'eau en ébullition au dit premier contenant (13) par l'intermédiaire de ladite communication fluidique établie.

2. Appareil électroménager selon la revendication 1, dans lequel ladite communication fluidique avec ledit deuxième contenant (13) est établie en réponse à la présence d'un mécanisme de poussée (14) dudit deuxième contenant (13) dans une relation de mise en prise avec ladite soupape bidirectionnelle (9).

3. Appareil électroménager selon la revendication 2, dans lequel ledit mécanisme de poussée (14) comporte une tige en prise de manière coulissante dans un logement de ressort de ladite soupape bidirectionnelle (9) dans lequel un ressort (15) sollicite une bille contre ladite tige.

4. Appareil électroménager selon la revendication 1 ou 3, dans lequel ladite soupape bidirectionnelle (9) transporte l'eau chauffée de retour vers ledit premier contenant (17) en réponse à l'absence dudit mécanisme de poussée (14) dudit deuxième contenant (13).

5. Appareil électroménager selon la revendication 4, dans lequel ladite communication fluidique est établie entre un conduit d'évacuation (5) dudit premier contenant (17) et un conduit de théière (11) dudit deuxième contenant (13).

6. Appareil électroménager selon la revendication 5, dans lequel ledit conduit de théière (11) comprend un évent supérieur hors duquel l'eau en ébullition est versée sur les feuilles de thé se trouvant sur le fond dudit deuxième contenant (13).

7. Appareil électroménager selon la revendication 6 dans lequel ladite pompe (2) communique avec ledit contenant inférieur (17) par l'intermédiaire d'un conduit d'entrée (16) et transfère l'eau en ébullition au dit contenant supérieur (13) par l'intermédiaire d'un conduit d'évacuation (5).

8. Appareil électroménager selon la revendication 7, dans lequel l'extrémité dudit conduit d'évacuation (5) mène à ladite soupape bidirectionnelle (9).

9. Appareil électroménager selon la revendication 8, dans lequel ledit conduit d'évacuation (5) et ledit conduit d'entrée (16) s'étendent perpendiculairement par rapport au fond dudit contenant inférieur (17).

10. Appareil électroménager selon l'une quelconque des revendications précédentes, dans lequel ledit appareil comprend des premiers moyens de chauffage électriques (3) qui ont une résistance plus grande par rapport à des deuxièmes moyens de chauffage électriques (4) qui ont une résistance plus faible.

11. Appareil électroménager selon la revendication 10, dans lequel ladite résistance de plus grand wattage (3) est encerclée par la résistance de plus faible wattage (4) s'étendant de manière périmétrique.

12. Appareil électroménager selon l'une quelconque des revendications précédentes, dans lequel ledit appareil comprend une unité de commande électronique (20) activant un mode « maintenir chaud » lorsqu'un commutateur de vapeur (8) détecte une certaine température et alimentant ladite résistance de plus faible wattage (4) plutôt qu'à la fois ladite résistance de plus grand wattage (3) et ladite résistance de plus faible wattage (4).

13. Appareil électroménager selon la revendication 12, dans lequel ledit appareil comprend une minuterie en communication avec ladite unité de commande électronique (20), permettant aux utilisateurs de fixer un temps spécifié pour le lancement de la préparation de thé.
